# EUROPÄISCHE PATENTSCHRIFT

(11) **EP 2 567 107 B1**
(45) Veröffentlichungstag und Bekanntmachung des Hinweises auf die Patenterteilung: **04.07.2018**
(21) Anmeldenummer: 11713185.4
(22) Anmeldetag: 02.04.2011
(51) Int. Cl.: F16B 13/06, F16B 13/08

(54) **SPREIZANKER UND VERFAHREN ZUM VERANKERN EINES SPREIZANKERS**
EXPANDING ANCHOR AND METHOD FOR ANCHORING AN EXPANDING ANCHOR
ÉLÉMENT D'ANCRAGE EXTENSIBLE ET PROCÉDÉ D'ANCRAGE D'UN ÉLÉMENT D'ANCRAGE EXTENSIBLE

(30) Priorität: 05.05.2010 DE 102010016797
(43) Veröffentlichungstag der Anmeldung: 13.03.2013
(73) Patentinhaber: fischerwerke GmbH & Co. KG, 72178 Waldachtal (DE)
(72) Erfinder: SCHÄUFFELE, Jürgen, 72290 Lossburg / Wittendorf (DE); LI, Longfei, 72178 Waldachtal (DE)
(86) Internationale Anmeldenummer: PCT/EP2011/001670
(87) Internationale Veröffentlichungsnummer: WO 2011/137955

(56) Entgegenhaltungen:
- WO-A1-2004/072495
- DE-U1-202005 006 769
- FR-A- 1 179 556

## Beschreibung

Die Erfindung betrifft einen Spreizanker mit den Merkmalen des Oberbegriffs des Anspruchs 1 sowie ein Verfahren mit den Merkmalen des Oberbegriffs des Anspruchs 7. Ein gattungsgemäßer Spreizanker ist bekannt aus dem europäischen Patent EP 1 301 719 B1. Der bekannte Spreizanker weist einen Ankerschaft mit einem vorderen Gewinde an einem vorderen Ende des Ankerschafts und einem hinteren Gewinde an einem hinteren Ende des Ankerschafts auf. Auf das vordere Gewinde des Ankerschafts ist ein Spreizkörper aufgeschraubt, der beim bekannten Spreizanker kegelstumpfförmig ist und ein axiales Durchgangsloch mit einem Innengewinde zum Aufschrauben auf das vordere Gewinde des Ankerschafts aufweist. Der Spreizkörper verjüngt sich in Richtung des hinteren Endes des Ankerschafts.

An den Spreizkörper anschließend ist eine Spreizhülse auf dem Ankerschaft des bekannten Spreizankers angeordnet. Durch Längsschlitze ist die Spreizhülse in Spreizsegmente unterteilt. Die Schlitze und damit die Spreizsegmente erstrecken sich über einen Teil einer axialen Länge der Spreizhülse, beispielsweise über etwa 2/3 der axialen Länge der Spreizhülse, so dass die Spreizhülse an ihrem hinteren Ende in Umfangsrichtung geschlossen ist. Am vorderen, dem Spreizkörper zugewandten Ende der Spreizhülse sind die Schlitze offen, die Spreizsegmente weisen am vorderen Ende der Spreizhülse freie Enden auf. An den geschlossenen Enden der Längsschlitze weist die Spreizhülse des bekannten Spreizankers eine umlaufende Nut auf, wodurch eine Art Scharniere mit in Sehnenrichtungen der Spreizhülse verlaufenden gedachten Schwenkachsen gebildet sind, an denen die Spreizsegmente nach außen schwenken können. In Richtung ihrer vorderen, freien, dem Spreizkörper zugewandten Enden verjüngen sich die Spreizsegmente konisch, um in einem zylindrischen Loch Freiraum zum Nach-Außen-Schwenken der Spreizsegmente, d.h. zum Aufspreizen der Spreizhülse zur Verfügung zu haben. An den freien, vorderen Enden weisen die Spreizsegmente nach außen stehende Krallen mit Schneiden auf, die beim Aufspreizen der Spreizhülse in eine Lochwand eingedrückt werden, wenn die Spreizhülse in einem Loch aufgespreizt wird. Das Loch ist beispielsweise als Bohrloch in einem betonierten oder gemauerten Ankergrund eines Bauwerks, beispielsweise einer Wand, einer Decke oder einem Boden angebracht. Durch das Eindrücken in die Lochwand beim Aufspreizen der Spreizhülse erzeugen die Krallen der Spreizsegmente Hinterschneidungen in der Lochwand, die von den Krallen der aufgespreizten Spreizhülse hintergriffen werden.

Auf das hintere Gewinde des Ankerschafts des bekannten Spreizankers ist eine Mutter aufgeschraubt. Zwischen der Mutter und der Spreizhülse ist eine Distanzhülse auf dem Ankerschaft angeordnet, über die sich die Spreizhülse beim Anziehen der Mutter zum Aufspreizen der Spreizhülse axial an der Mutter, die auf das hintere Gewinde des Ankerschafts aufgeschraubt ist, abstützt.

Zum Aufspreizen wird die Mutter auf dem hinteren Gewinde des Ankerschafts des bekannten Spreizankers gedreht. Der Ankerschaft kann sich mit der Mutter mitdrehen und dadurch tiefer in den Spreizkörper einschrauben und/oder die Mutter auf dem hinteren Gewinde dreht sich gegenüber dem Ankerschaft. Auf jeden Fall verkürzt sich der Abstand zwischen der Mutter auf dem hinteren Gewinde des Ankerschafts und dem Spreizkörper. Dadurch wird der Spreizkörper in die Spreizhülse eingezogen, die sich axial über die Distanzhülse an der Mutter abstützt und sich deswegen axial nicht bewegt. Der Spreizkörper drückt die Spreizsegmente nach außen, d.h. er spreizt die Spreizhülse auf, wobei die Krallen der Spreizhülse wie bereits erläutert in eine Lochwand eingedrückt werden und dadurch Hinterschneidungen erzeugen, die sie hintergreifen. Die Spreizhülse wird so weit aufgespreizt, dass die konischen Außenflächen der Spreizsegmente über ihre gesamte Länge bzw. vollflächig an der Lochwand anliegen. Der Spreizanker ist im Loch verankert, wobei sowohl die vom Spreizkörper nach außen gegen die Lochwand gedrückten Spreizsegmente durch Reibschluss an der Lochwand, als auch die in die Lochwand eingedrückten Krallen durch Formschluss die Verankerung des Spreizankers im Loch bewirken.

Aus dem Dokument FR 1 179 556 A ist ein Spreizanker bekannt, der eine Mutter aufweist, die bis zu einem Überschreiten eines bestimmten Drehmoments drehfest mit dem Ankerschaft ist. Erst nach Überschreiten des Drehmoments kann die Mutter am Ankerschaft in Längsrichtung bewegt werden.

Aufgabe der Erfindung ist, die Verankerungseigenschaften bei einem Spreizanker der vorstehend erläuterten Art zu verbessern. Diese Aufgabe wird erfindungsgemäß durch die Merkmale des Anspruchs 1 gelöst. Der erfindungsgemäße Spreizanker kann anstelle der Mutter, die auf das hintere Gewinde eines Ankerschafts aufgeschraubt ist, allgemein ein Schraubelement mit einem Innen- oder einem Außengewinde wie eine Mutter oder eine Schraube, die auf ein hinteres Außengewinde des Ankerschafts aufgeschraubt oder in ein hinteres Innengewinde des Ankerschafts eingeschraubt ist, aufweisen. Das Schraubelement ist drehmomentbehaftet mit dem hinteren Gewinde des Ankerschafts, es überträgt zumindest zu Beginn der Drehbewegung zum Aufspreizen der Spreizhülse des Spreizankers ein größeres Drehmoment auf den Ankerschaft als der Ankerschaft auf einen Spreizkörper des Spreizankers überträgt. Die Erfindung stellt sicher, dass sich zu Beginn der Drehbewegung der Ankerschaft mit dem Schraubelement am hinteren Gewinde des Ankerschafts mitdreht, und somit, dass sich der Ankerschaft zu Beginn des Aufspreizens der Spreizhülse gegenüber dem Spreizkörper dreht. Eine Schraubbewegung, die eine Axialbewegung des Spreizkörpers gegenüber dem Ankerschaft zur Folge hat, wird durch die Erfindung zu Beginn des Aufspreizens der Spreizhülse sichergestellt. Erst wenn die Spreizhülse zumindest ein Stück weit aufgespreizt ist und dadurch in einem Loch in einem Ankergrund, wenn auch nicht unbedingt mit maximaler Verankerungskraft, so doch zumindest mit einer gewissen Verankerungskraft verankert ist, kann sich das Schraubelement gegenüber dem Ankerschaft drehen und über das hintere Gewinde den Ankerschaft axial verschieben. Dabei wird die Spreizhülse stärker aufgespreizt und/oder ein zu befestigender Gegenstand gegen den Ankergrund gespannt.

Wird das größere Drehmoment, welches das drehmomentbehaftete Schraubelement am hinteren Gewinde auf den Ankerschaft überträgt, überwunden, kann sich das Schraubelement gegenüber dem Ankerschaft drehen. Die Drehung des Schraubelements gegenüber dem Ankerschaft ist ohne Weiteres erkennbar und stellt sicher, dass die Spreizhülse zumindest in gewissem Maße aufgespreizt ist. Das Aufspreizen kann damit beendet sein oder es kann beispielsweise eine bestimmte weitere Anzahl Drehungen des Schraubelements zu einem vorgesehenen Aufspreizen der Spreizhülse vorgesehen sein. Mit der Erfindung lässt sich in einfacher Weise eine vorgesehene Aufspreizung der Spreizhülse des Spreizankers erreichen und auch sicherstellen.

Das drehmomentbehaftete Schraubelement kann eine Sicherungsmutter mit einem einliegenden Kunststoffring sein, der ein Klemmen auf dem Gewinde des Ankerschafts und dadurch die gewünschte Drehmomentübertragung auf den Ankerschaft bewirkt. Eine andere Möglichkeit ist eine sog. Stovermutter, die unrund und dadurch auf dem hinteren Gewinde des Ankerschafts klemmend ist. Auch reibungserhöhende Maßnahmen wie ein Sicherungslack, eine Körnung, d.h. eine Gewindeverformung, sind möglich, um das Schraubelement am hinteren Gewinde des Ankerschafts drehmomentbehaftet auszubilden. Eine weitere Maßnahme, um die Übertragung des größeren Drehmoments auf den Ankerschaft sicherzustellen, ist eine Sollbruchstelle. Dazu kann beispielsweise eine Kronenmutter auf das hintere Gewinde des Ankerschafts aufgeschraubt und mittels eines Scherstifts gesichert sein. Bei Überschreiten des größeren Drehmoments bricht der Scherstift und die Mutter ist auf dem hinteren Gewinde drehbar, das auf den Ankerschaft übertragene Drehmoment fällt sprungartig ab. Die aufgeführten Maßnahmen zum drehmomentbehafteteten Ausbilden des Schraubelements sind nicht abschließend. Das drehmomentbehaftetete Schraubelement hat zwei Funktionen: seine eine Funktion ist, das Mitdrehen des Ankerschafts zu Beginn der Drehung sicherzustellen. Die andere Funktion ist die Anzeige, dass ein bestimmtes Drehmoment und damit eine ausreichende Aufspreizung erreicht ist oder nach einer bestimmten Anzahl Weiterdrehungen des Schraubelements erreicht wird.

Der Spreizkörper des erfindungsgemäßen Spreizankers ist vorzugsweise kegelstumpfförmig, wobei andere Formen wie beispielsweise ein Pyramidenstumpf oder eine Keilform, die die Spreizhülse beim Einziehen aufspreizen, ebenfalls möglich sind. Ein Querschnitt des Spreizkörpers kann gleichmäßig, also beispielsweise kreisförmig oder ein regelmäßiges Vieleck, sein, oder eine unregelmäßige Form, beispielsweise oval, elliptisch oder ein unregelmäßiges Vieleck, aufweisen. In Längsrichtung kann der Spreizkörper außer gerade auch ballig oder hohlrund sein oder es können sich beispielsweise mehrere Konen mit unterschiedlichen Konuswinkeln aneinander anschließen. Wie das Schraubelement am hinteren Gewinde des Ankerschafts kann auch der Spreizkörper mit einem Innengewinde auf ein vorderes Außengewinde des Ankerschafts oder mit einem Außengewinde in ein vorderes Innengewinde des Ankerschafts auf- bzw. eingeschraubt sein. Die zusammenwirkenden Gewinde des Ankerschafts und des Spreizkörpers bilden ebenso eine Schraubverbindung wie das hintere Gewinde des Ankerschafts und das mit ihm zusammenwirkende Gewinde des Schraubelements.

Anstatt einer Distanzhülse weist der Ankerschaft des erfindungsgemäßen Spreizankers ein Widerlager für die Spreizhülse auf, die die Spreizhülse beim Einziehen des Spreizkörpers axial abstützt. Das Widerlager kann beispielsweise eine Ringstufe oder eine oder mehrere, über den Umfang verteilt angeordnete und nach außen abstehende Nasen oder dgl. sein. Die Aufzählung ist nicht abschließend. Ein Vorteil des Widerlagers für die Spreizhülse am Ankerschaft ist, dass sich die Spreizhülse nicht am Schraubelement am hinteren Gewinde des Ankerschafts abstützt. Dadurch spannt das Schraubelement am hinteren Gewinde des Ankerschafts, wenn es festgezogen ist, einen zu befestigen Gegenstand gegen den Ankergrund, in dem der Spreizanker verankert ist. So lange sich der Ankerschaft mit dem Schraubelement an seinem hinteren Gewinde mitdreht, stützt das Widerlager des Ankerschafts die Spreizhülse axial ab, so dass sich die Spreizhülse zu Beginn des Aufspreizens nicht axial bewegt, sondern ausschließlich aufspreizt. Wird das größere Drehmoment des drehmomentbehafteten Schraubelements am hinteren Gewinde des Ankerschafts überwunden, übt es eine axiale Zugkraft auf den Ankerschaft aus, die den Spreizkörper weiter in die Spreizhülse einzieht und die Spreizhülse stärker aufspreizt. Zugleich entlastet der vom Schraubelement auf den Ankerschaft ausgeübte Zug die Abstützung der Spreizhülse am Widerlager des Ankerschafts, das Widerlager kann von der Spreizhülse abheben und/oder die Spreizhülse kann sich zusätzlich zu ihrer Aufspreizung axial im Loch bewegen. Nach dem anfänglich ausschließlichen Aufspreizen bewirkt die folgende Axialbewegung der Spreizhülse zusätzlich zu ihrer Aufspreizung eine Längsbewegung ihrer nach außen abstehenden Krallen, wodurch die Krallen an der Lochwand schaben. Das verbessert bzw. erleichtert das Eindringen der Krallen in die Lochwand und den dabei von den Krallen geschaffenen Hinterschnitt und ihren Hintergriff des Hinterschnitts. Die Verankerung des erfindungsgemäßen Spreizankers ist dadurch verbessert.

Die Spreizsegmente der Spreizhülse des erfindungsgemäßen Spreizankers weisen nach außen stehende Krallen mit Schneiden auf. Die Krallen sind vorzugsweise an oder nahe den freien vorderen Enden der Spreizsegmente angeordnet, sie stehen in etwa radial nach außen. Ihre Schneiden verlaufen vorzugsweise in etwa in Umfangsrichtung. Von der Seite auf die Spreizhülse gesehen sind die Krallen vorzugsweise zahnförmig, d.h. in einem Längsschnitt der Spreizhülse sind die Krallen vorzugsweise spitzwinklig. Sie können sägezahnartig schräg in einer Richtung, vorzugsweise etwas nach hinten, d.h. in Richtung des hinteren Gewindes des Ankerschafts geneigt sein. Durch ihre Spitzwinkligkeit dringen die Krallen leichter in die Lochwand ein.

Bei einer Ausgestaltung der Erfindung bewegt sich die Spreizhülse beim Aufspreizen in Längsrichtung des Ankerschafts. Die Längsbewegung der Spreizhülse erfolgt nach einem anfänglichen Aufspreizen ohne Bewegung der Spreizhülse in Längsrichtung des Ankerschafts, wenn nach Überwinden des größeren Drehmoments des drehmomentbehafteten Schraubelements am hinteren Gewinde sich das Schraubelement gegenüber dem Ankerschaft dreht und dabei eine Zugkraft auf den Ankerschaft ausübt. Die Spreizhülse bewegt sich mit dem Ankerschaft mit, wobei der Weg der Spreizhülse kürzer als der des Ankerschafts sein kann. Die Längsbewegung der Spreizhülse bewirkt eine Bewegung der von den Spreizsegmenten der Spreizhülse nach außen abstehenden Krallen entlang der Lochwand, die Krallen werden nicht nur nach außen gedrückt, sondern zusätzlich in Längsrichtung des Lochs bewegt. Dadurch wird ein Schaben der Krallen an der Lochwand erzielt, das das Einformen der Krallen in die Lochwand und damit die Erzeugung des Hinterschnitts im Loch erleichtert und verbessert.

Die Schneiden der Krallen sind erfindungsgemäß stumpf, also insbesondere gerundet oder abgeflacht, ihre Abnutzung ist dadurch verringert. Zudem oder alternativ sind Abschnitte der Schneiden gegenüber einem gedachten Umkreis nach innen versetzt, indem sich kreisbogenförmige, in Umfangsrichtung verlaufende Abschnitte der Schneiden mit in Sehnenrichtung verlaufenden Abschnitten abwechseln. Diese Ausgestaltung der Erfindung hat den Vorteil, dass die gegenüber den nach innen versetzten Abschnitten nach außen vorspringenden Abschnitte der Schneiden bei gegebener Aufspreizkraft einen höheren Druck auf die Lochwand ausüben und dadurch das Eindringen der Krallen der Spreizhülse in die Lochwand erleichtern und verbessern. Bei einer Ausgestaltung der Erfindung erstrecken sich die Spreizsegmente der Spreizhülse in Längsrichtung oder auch in einem Winkel zur Längsrichtung, beispielsweise schraubenlinienförmig, was ebenfalls als "in Längsrichtung" im Sinne der Erfindung verstanden werden soll.

Um die Spreizhülse und den Spreizkörper gegen Mitdrehen mit dem Ankerschaft beim Aufspreizen zu halten, sieht eine Ausgestaltung der Erfindung ein oder mehrere nach außen überstehende Drehsicherungselemente an der Spreizhülse und/oder am Spreizkörper vor. Die Drehsicherungselemente können beispielsweise Sicken, Warzen, Nasen, Rippen, Rändelungen oder dgl. sein, die beim Einbringen des Spreizankers in ein Loch an der Lochwand streifen und anliegen und das Mitdrehen der Spreizhülse und des Spreizkörpers mit dem Ankerschaft verhindern.

Eine Ausgestaltung der Erfindung sieht eine reibungserhöhende Einrichtung am Spreizkörper und/oder an der Spreizhülse vor, die die Reibung zwischen dem Spreizkörper und der Spreizhülse beim Einziehen des Spreizkörpers in die Spreizhülse erhöht, wenn die Spreizhülse aufgespreizt ist. Eine Weiterbildung sieht eine Aufrauung, beispielsweise einen Rändel, und/oder einen Wulst als reibungserhöhende Einrichtung vor. Die reibungserhöhende Einrichtung kann zugleich das Drehsicherungselement bilden. Die reibungserhöhende Einrichtung ist beispielsweise an einem durchmesser-größeren Ende des Spreizkörpers angeordnet, das die Spreizhülse erreicht, wenn der Spreizkörper eingezogen ist. Die reibungserhöhende Einrichtung erhöht den Widerstand des Spreizkörpers gegen Einziehen in die Spreizhülse und hat einen Drehmomentanstieg beim Drehantrieb des Schraubelements am hinteren Gewinde des Ankerschafts zur Folge, der das vollständige Aufspreizen des Spreizankers signalisiert.

Die Erfindung stellt weiter ein Verfahren mit den Merkmalen des Anspruchs 7 bereit.

Die Erfindung wird nachfolgend anhand eines in der Zeichnung dargestellten Ausführungsbeispiels näher erläutert. Es zeigen:
- Figur 1: eine Seitenansicht eines erfindungsgemäßen Spreizankers;
- Figur 2: eine vergrößerte Darstellung des Spreizankers aus Figur 1 im Bereich einer Spreizhülse in aufgespreiztem Zustand;
- Figur 3: eine Stirnansicht der Spreizhülse des Spreizankers aus Figuren 1 und 2; und
- Figur 4: einen vergrößerten Längsschnitt eines Spreizsegments der Spreizhülse des Spreizankers aus Figuren 1 und 2 im Bereich einer Kralle.

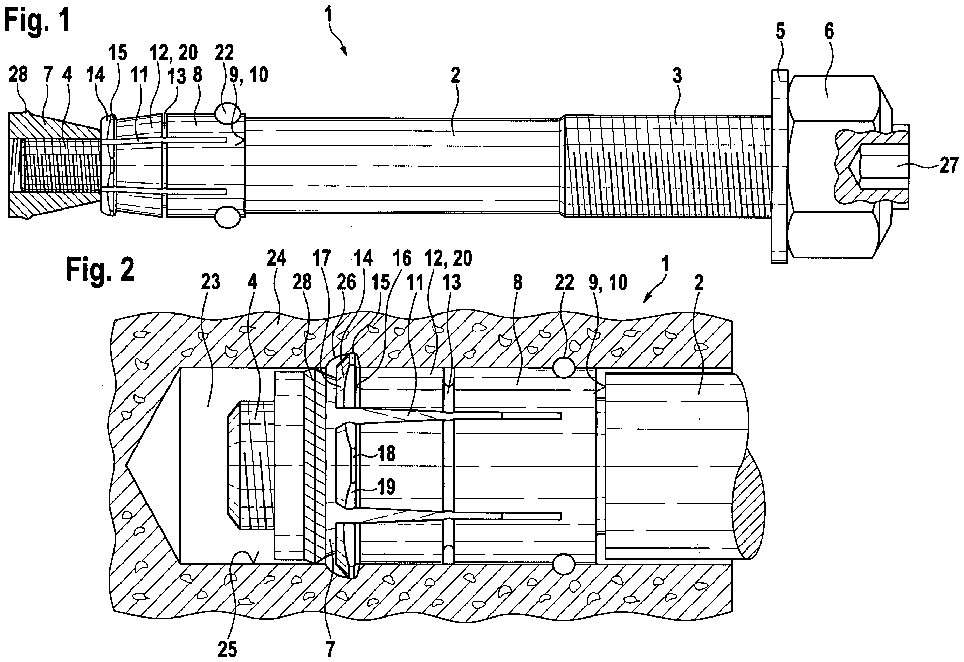

Der in Figur 1 dargestellte, erfindungsgemäße Spreizanker 1 weist einen bolzenförmigen Ankerschaft 2 mit einem hinteren Gewinde 3 an einem hinteren Ende und einem vorderen Gewinde 4 an einem vorderen Ende auf. Die Bezeichnung als hinteres und vorderes Ende bzw. Gewinde 3, 4 dient insbesondere der eindeutigen Bezeichnung. An dem hinteren Gewinde 3 ist eine Unterlegscheibe 5 angeordnet und eine Mutter 6 aufgeschraubt, die allgemein auch als Schraubelement aufgefasst werden kann. Ein Innengewinde der Mutter 6 und das hintere Gewinde 3 bilden eine Schraubverbindung der Mutter 6 mit dem Ankerschaft 2.

Auf das vordere Gewinde 4 des Ankerschafts 2 ist ein Spreizkörper 7 aufgeschraubt, der ein axiales Durchgangsloch aufweist, also rohrförmig ist. Das Durchgangsloch des Spreizkörpers 7 weist ein Innengewinde auf, mit dem er auf das vordere Gewinde 4 des Spreizankers 2 aufgeschraubt ist. Das Innengewinde des Spreizkörpers 7 und das vordere Gewinde 4 des Ankerschafts 2 bilden eine Schraubverbindung, über die der Spreizkörper 7 mit dem Ankerschaft 2 verbunden ist. Es ist nicht zwingend, dass der Ankerschaft 2 ein Außengewinde als vorderes Gewinde 4 und der Spreizkörper 7 ein Innengewinde aufweisen. Denkbar ist beispielsweise auch eine Umkehrung, d.h. ein massiver Spreizkörper 7 mit einem axialen Schaftfortsatz an seinem hinteren, sich verjüngenden Ende, wobei der Schaftfortsatz ein Außengewinde aufweist, das in ein Innengewinde am vorderen Ende des Ankerschafts 2 eingeschraubt ist (nicht dargestellt). Der Spreizkörper 7 ist kegelstumpfförmig, wobei diese Form nicht zwingend für die Erfindung ist. Die Form des Spreizkörpers 7 ist dadurch bestimmt, dass er beim Einziehen in eine Spreizhülse 8 diese aufspreizt. Der Spreizkörper 7 verjüngt sich in Richtung des hinteren Endes des Ankerschafts 2.

Die Spreizhülse 8 ist im Anschluss an den Spreizkörper 7 auf dem vorderen Gewinde 4 des Ankerschafts 2 angeordnet. Ihr hinteres Ende liegt an einer Ringstufe 9 des Ankerschafts 2 an, mit der sich der Ankerschaft 2 auf einen Durchmesser seines vorderen Gewindes 4 verjüngt. Die Ringstufe 9 bildet ein Widerlager 10, das die Spreizhülse 8 axial am Ankerschaft 2 abstützt. Die Spreizhülse 8 weist in ihrer Längsrichtung verlaufende Schlitze 11 auf, die an einem vorderen, dem Spreizkörper 7 zugewandten Ende der Spreizhülse 8 offen sind, sich über einen größten Teil einer Länge der Spreizhülse 8 erstrecken und mit Abstand vom hinteren Ende der Spreizhülse 8 enden. Die Schlitze 11 unterteilen die Spreizhülse 8 in Spreizsegmente 12, die sich in Längsrichtung der Spreizhülse 8 erstrecken. Ungefähr an ihrer Längsmitte weist die Spreizhülse 8 eine umlaufende Nut 13 auf, die eine Art Knickstelle der Spreizsegmente 12 bildet. Die umlaufende Nut 13 wirkt als eine Art Scharnier mit in Sehnenrichtung verlaufenden, gedachten Achsen für jedes Spreizsegment 12, um das ein vorderer Abschnitt der Spreizsegmente 12 nach außen schwenken kann.

Die Mutter 6 ist eine selbstsichernde Mutter mit einem in einer Nut auf ihrer Innenseite einliegenden Kunststoffring, der in der Zeichnung nicht sichtbar ist. Durch den Kunststoffring ist die Mutter 6 reibungs- und drehmomentbehaftet auf dem hinteren Gewinde 3 des Ankerschafts 2, sie überträgt ein größeres Drehmoment auf den Ankerschaft 2 als der Ankerschaft 2 auf den Spreizkörper 7. Es bestehen auch andere Möglichkeiten, die Mutter 6 oder allgemein ein Schraubelement drehmomentbehaftetet auszubilden, die ein größeres Drehmoment auf den Ankerschaft 2 überträgt als dieser auf den Spreizkörper 7. Ein Beispiel ist eine sog. Stovermutter, die etwas unrund ist und dadurch klemmt. Auch besteht die Möglichkeit, eine Sollbruchstelle vorzusehen, damit die Mutter 6 auf dem hinteren Gewinde ein größeres Drehmoment auf den Ankerschaft 2 überträgt als der Ankerschaft 2 auf den Spreizkörper 7. Beispielsweise kann eine Kronenmutter auf das hintere Gewinde 3 aufgeschraubt sein, durch deren Schlitze ein Scherstift gesteckt ist (nicht dargestellt). Nach dem Brechen der Sollbruchstelle, beispielsweise dem Abscheren des Scherstifts, fällt das Drehmoment der Kronenmutter auf ungefähr das Drehmoment des Spreizkörpers 7. Die Aufzählung ist beispielhaft und nicht abschließend.

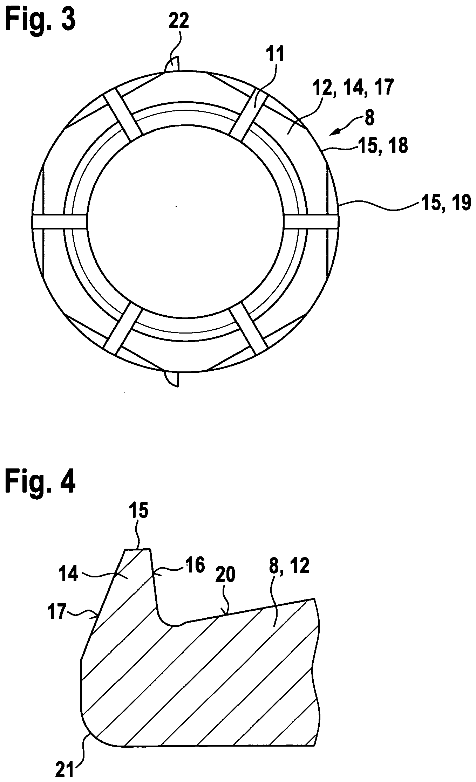

An ihren vorderen, dem Spreizkörper 7 zugewandten Enden weisen die Spreizsegmente 12 nach außen stehende Krallen 14 mit Schneiden 15 auf. Wie in der Vergrößerung der Figur 4 zu sehen, weisen die Krallen 14 in einem Längsschnitt durch die Spreizhülse 8 gesehen die Form von Zähnen auf, sie sind sägezahnförmig mit einer nahezu radialen hinteren Flanke 16 und einer eine größere Schräge aufweisenden vorderen Flanke 17. Die Schneiden 15 sind stumpf, damit sie beim Eindrücken in Beton nicht stark verschleißen oder brechen. Die Schneiden 15 weisen kreisbogenförmige, in Umfangsrichtung der Spreizhülse 8 verlaufende Abschnitte 18 in Umfangsrichtung in den Mitten der Schneiden 15 und gerade in Sehnenrichtung verlaufende Abschnitte 19 dazwischen auf. Mitten der in Sehnenrichtung verlaufenden Abschnitte 19 der Schneiden 15 befinden sich an den Schlitzen 11. Die kreisbogenförmigen Abschnitte 18 stehen nicht über einen Umfang der Spreizhülse 8 vor. Durch die rückspringenden, geraden Abschnitte 19 weisen die Schneiden 15 in den kreisbogenförmigen Abschnitten 18 beim Aufspreizen der Spreizhülse 8 eine höhere Pressung auf, wodurch sich die Krallen 14 leichter in beispielsweise Beton eindrücken lassen.

Eine Höhe der kreisbogenförmigen Abschnitte 18 der Schneiden 15 der Krallen 14 in Längsrichtung der Spreizhülse 8 beträgt zwischen etwa 0,1-2,0 mm, beispielsweise etwa 0,4 mm. Die Krallen 14 sind spitzwinklig, ihre hinteren Flanken 16 verlaufen in einem Winkel zwischen etwa 0°-30°, beispielsweise von 10° zu einer gedachten Radialen, ihre vorderen Flanken 17 verlaufen in einem Winkel von etwa 15°-60°, beispielsweise von 40° zu einer Radialen. Zwischen der umlaufenden Nut 13, die die Knickstellen bzw. Scharniere der Spreizsegmente 12 bildet, und den Krallen 14 verjüngt sich die Spreizhülse 8 kegelförmig nach vorn, d.h. in Richtung der Krallen 14. Die hinteren Flanken 16 der Krallen 14 verlaufen in etwa rechtwinklig zu einer Kegelmantelfläche 20 der Spreizsegmente 12 zwischen der umlaufenden Nut 13 und den Krallen 14, d.h. in etwa tangential zu den gedachten Schwenkachsen, die die umlaufende Nut 13 der Spreizhülse 8 bildet. Beim Aufspreizen der Spreizhülse 8 schwenken die Spreizsegmente 12 um die durch die umlaufende Nut 13 gebildeteten Schwenkachsen nach außen, wobei sich die Krallen 14 auf Kreisbahnen bewegen, zu denen ihre hinteren Flanken 16 tangential verlaufen. Die Kegelmantelfläche 20 weist einen kleineren Konuswinkel als der Spreizkörper 7 auf, so dass beim Aufspreizen der Spreizhülse 8 vorwiegend der vordere Teil der Spreizsegmente 12 zur Anlage kommt.

Die vorderen Flanken 17 der Krallen 14 verlaufen weniger steil als die hinteren Flanken 16, damit die Krallen 14 eine ausreichende Stabilität aufweisen. Trotzdem sind die vorderen Flanken 17 steil, damit die Krallen 14 spitzwinklig sind und beim Aufspreizen einen hohen Flächendruck erzeugen, um sich beispielsweise in Beton eindrücken zu lassen. Ein vorderer, umlaufender Innenrand 21 (Figur 4) der Spreizhülse 8 weist eine Rundung auf, um ein gutes Gleiten auf der Mantelfläche des Spreizkörpers 7 zu gewährleisten. Nahe ihrem hinteren Ende weist die Spreizhülse 8 durch Umformen hergestellte, nach außen überstehende Drehsicherungselemente 22 auf. In Seitenansicht zum Spreizanker 1 gesehen sind die Drehsicherungselemente 22 linsenförmig, sie verlaufen in Längsrichtung und sind scharfkantig. Dadurch weisen sie einen niedrigen Einbringwiderstand in ein Loch in axialer Richtung und eine gute Drehsicherungswirkung auf.

Die Teile des Spreizankers 1 bestehen vorzugsweise aus Metall, insbesondere aus Stahl, vorzugsweise aus einem hochfesten und/oder korrosionsbeständigen Stahl wie beispielsweise VA-Stahl.

Zur Verankerung wird der Spreizanker 1 mit seinem vorderen Ende voran, auf das der Spreizkörper 7 aufgeschraubt ist, durch ein Durchgangsloch eines hier nicht dargestellten, zu befestigenden Gegenstands in ein zylindrisches Loch 23 in einem Ankergrund 24 in beispielsweise Beton eingebracht (Figur 2). Durch Drehantrieb der Mutter 6, die wie erläutert klemmend, d.h. drehmomentbehaftetet auf dem hinteren Gewinde 3 des Ankerschafts 2 ist, wird der Ankerschaft 2 drehend angetrieben. Aufgrund ihrer Drehsicherungselemente 22 hält die Spreizhülse 8 den Spreizkörper 7 drehfest im Loch 23, so dass das vordere Gewinde 4 des Ankerschafts 2 den Spreizkörper 7 zwischen die Spreizsegmente 12 in die Spreizhülse 8 einzieht. Beim Einziehen in die Spreizhülse 8 drückt der Spreizkörper 7 die Spreizsegmente 12 auseinander, so dass sie, auch in den Abschnitten zwischen der umlaufenden Nut 13 und den Krallen 14, an einer Lochwand 25 des Lochs 23 anliegen. Das Auseinanderdrücken der Spreizsegmente 12 ist als Aufspreizen der Spreizsegmente 12 bzw. der Spreizhülse 8 zu bezeichnen, wodurch der Spreizanker 1 im Loch 23 im Ankergrund 24 verankert wird bzw. ist. Die nach außen stehenden Krallen 14 werden vom Spreizkörper 7 in die Lochwand 25 eingedrückt, sie formen eine Hinterschneidung in die Lochwand 25, die sie hintergreifen, wodurch ein axialer Halt des Spreizankers 1 im Ankergrund 24, d.h. eine Verankerung des Spreizankers 1 verbessert wird.

Das Aufspreizen der Spreizhülse 8 und Verankern des Spreizankers 1 ist beendet, wenn die Spreizsegmente 12 zwischen der umlaufenden Nut 13 und den Krallen 14 an der Lochwand 25 des Lochs 23 anliegen und die Krallen 14 in die Lochwand 25 eingedrückt sind.

Während des Aufspreizens der Spreizhülse 8 und des Einziehens des Spreizkörpers 7 in die Spreizhülse 8 steigt das Drehmoment an. Die Spreizhülse 8 wird gegen das Widerlager 10 des Ankerschafts 2 beaufschlagt und überträgt ein ebenfalls steigendes Drehmoment auf den Ankerschaft 2. Während des Aufspreizens übersteigt das Drehmoment, das die Spreizhülse 8 und der Spreizkörper 7 auf den Ankerschaft 2 übertragen, das zunächst größere Drehmoment der Mutter 6, die auf dem hinteren Gewinde 3 des Ankerschafts 2 reibungs- und damit drehmomentbehaftet ist. Es beginnt sich dann, nach einem anfänglichen Aufspreizen der Spreizhülse 8, die Mutter 6 auf dem hinteren Gewinde 3 des Ankerschafts 2 zu drehen. Weil sich die Mutter 6 über die Unterlegscheibe 5 und den nicht dargestellten, zu befestigenden Gegenstand axial am Ankergrund 24 abstützt, bewirkt eine Drehung der Mutter 6 auf dem hinteren Gewinde 3 eine Axialbewegung des Ankerschafts 2. Das hat, außer dass der Spreizkörper 7 tiefer in die Spreizhülse 8 eingezogen wird und diese weiter aufspreizt, zur Folge, dass sich die axiale Abstützung der Spreizhülse 8 am Widerlager 10 des Ankerschafts 2 abschwächt, es kann, wie in Figur 2 zu sehen, sich der Ankerschaft 2 axial gegenüber der Spreizhülse 8 verschieben, so dass ein Abstand zwischen dem Widerlager 10 und dem hinteren Ende der Spreizhülse 8 entsteht. Jedenfalls bewirkt die Axialbewegung des Ankerschafts 2, wenn sich die Mutter 6 auf dem hinteren Gewinde 3 dreht, eine Axialkraft auf die Spreizhülse 8, wodurch sich auch diese axial bewegt. Nach einem anfänglich ausschließlich radialen Aufspreizen bewegt sich dadurch die Spreizhülse 8, wenn sich die Mutter 6 auf dem hinteren Gewinde 3 des Ankerschafts 2 dreht, axial, so dass die Krallen 14 nicht nur nach außen gedrückt, d.h. aufgespreizt werden, sondern sich auch axial bewegen. Die Schneiden 15 der Krallen 14 werden deswegen nicht ausschließlich radial nach außen und in die Lochwand 25 des Lochs 23 eingedrückt, sondern zugleich axial bewegt. Das erleichtert das Eindrücken der Krallen 14 in die Lochwand 25. Die Krallen 14 schaffen eine ringförmige, hier als Hinterschneidung bezeichnete Vertiefung 26 mit gerundetem Querschnitt, die die Krallen 14 hintergreifen. Die Vertiefung 26 ist in axialer Richtung höher als die Krallen 14 ebenfalls in axialer Richtung dick sind.

Solange sich die Mutter 6 zu Beginn des Aufspreizens nicht auf dem hinteren Gewinde 3 dreht, sondern sich der Ankerschaft 2 mit der Mutter 6 mitdreht, findet keine Axialbewegung des Ankerschafts 2 statt und aufgrund ihrer axialen Abstützung am Widerlager 10 des Ankerschafts 2 bewegt sich die Spreizhülse 8 beim Einziehen des Spreizkörpers 7 nicht axial, sondern ihre Spreizsegmente 12 werden ausschließlich radial nach außen gedrückt, d.h. aufgespreizt.

Am durchmesser-größeren Ende weist der kegelstumpfförmige Spreizkörper 7 einen umlaufenden Schrägrändel 28 auf. Der Schrägrändel 28 steht nach außen über, er steht in Kontakt mit der Lochwand 25 des Lochs 23 im Ankergrund 24 und bildet eine Drehsicherung, die ein Mitdrehen des Spreizkörpers 7 mit der Ankerstange 2 verhindert. Zugleich bildet der Schrägrändel 28 eine reibungserhöhende Einrichtung für die Spreizhülse 8, die allerdings erst wirksam wird, wenn die freien, vorderen Enden der Spreizsegmente 12 den Schrägrändel 28 erreichen. Die Geometrie und Abmessungen sind so gewählt, dass dies beim normalen, vollständigen Aufspreizen nicht der Fall ist. Erst wenn bei einer Locherweiterung beispielsweise in Folge einer Rissbildung im Ankergrund 24 der Spreizanker 1 nachspreizt, d.h. eine Zubeanspruchung des Ankerschafts 2 den Spreizkörper 7 tiefer in die Spreizhülse 8 einzieht, gelangt der Schrägrändel 28, der die reibungserhöhende Einrichtung bildet, zwischen die Spreizsegmente 12. Das bremst und/oder beendet das Einziehen des Spreizkörpers 7 in die Spreizhülse 8. Der Schrägrändel 28, der die reibungserhöhende Einrichtung bildet, begrenzt eine Axialverschiebung der Ankerstange 2 und des Spreizkörpers 7 in der Spreizhülse 8 beim Nachspreizen des Spreizankers 1.

Ein größter Durchmesser des Ankerschafts 2 ist vorzugsweise kleiner und jedenfalls nicht größer als ein Durchmesser der Spreizhülse 8.

### Bezugszeichenliste

### Spreizanker

- 1: Spreizanker
- 2: Ankerschaft
- 3: hinteres Gewinde
- 4: vorderes Gewinde
- 5: Unterlegscheibe
- 6: Mutter
- 7: Spreizkörper
- 8: Spreizhülse
- 9: Ringstufe
- 10: Widerlager
- 11: Schlitz
- 12: Spreizsegment
- 13: umlaufende Nut
- 14: Kralle
- 15: Schneide
- 16: Flanke
- 17: Flanke
- 18: Abschnitt
- 19: Abschnitt
- 20: Kegelmantelfläche
- 21: Innenrand
- 22: Drehsicherungselement
- 23: Loch
- 24: Ankergrund
- 25: Lochwand
- 26: Vertiefung
- 27: Innensechskant
- 28: Schrägrändel

## Patentansprüche

1. Spreizanker (1) mit einem Ankerschaft (2), der ein hinteres Gewinde (3) mit einem Schraubelement (6), einen Spreizkörper (7), der mittels einer Schraubverbindung mit einem vorderen Gewinde (4) des Ankerschafts (2) verbunden ist, und eine Spreizhülse (8) aufweist, wobei durch Drehen des Ankerschafts (2) gegenüber dem Spreizkörper (7) der Spreizkörper (7) in Längsrichtung des Ankerschafts (2) bewegbar und in die Spreizhülse (8) einziehbar ist und die Spreizhülse (8) dadurch aufspreizt, wobei die Spreizhülse (8) nach außen stehende Krallen (14) mit Schneiden (15) aufweist, die beim Aufspreizen der Spreizhülse (8) in einem Loch (23) in eine Lochwand (25) eingedrückt werden, wobei der Ankerschaft (2) ein Widerlager (10) für die Spreizhülse (8) aufweist, das die Spreizhülse (8) axial beim Einziehen des Spreizkörpers (7) abstützt, und wobei das Schraubelement (6) drehmomentbehaftet mit dem hinteren Gewinde (3) des Ankerschafts (2) ist, derart, dass zumindest zu Beginn einer Drehbewegung zum Aufspreizen der Spreizhülse (8) des Spreizankers (1) der Ankerschaft (2) mit dem Schraubelement (6) mitdreht und sich der Ankerschaft (2) zu Beginn des Aufspreizens der Spreizhülse (8) gegenüber dem Spreizkörper (7) dreht, **dadurch gekennzeichnet, dass** die Schneiden (15) stumpf sind und/oder dass die Schneiden (15) kreisbogenförmige- und in Sehnenrichtung verlaufende Abschnitte (18, 19) aufweisen.

2. Spreizanker nach Anspruch 1, **dadurch gekennzeichnet, dass** das Schraubelement (6) derart am hinteren Gewinde (3) angeordnet ist, dass nach einem anfänglichen Aufspreizen ohne Bewegung der Spreizhülse (8) in Längsrichtung des Ankerschafts (2) sich das Schraubelement (6) gegenüber dem Ankerschaft (2) dreht und sich die Spreizhülse (8) mit dem Ankerschaft (2) bewegt.

3. Spreizanker nach Anspruch 1, **dadurch gekennzeichnet, dass** die Spreizhülse (8) durch in Längsrichtung verlaufende Schlitze (11) in Spreizsegmente (12) unterteilt ist.

4. Spreizanker nach Anspruch 1, **dadurch gekennzeichnet, dass** die Spreizhülse (8) und/oder der Spreizkörper (7) mindestens ein nach außen überstehendes Drehsicherungselement (22) aufweist.

5. Spreizanker nach Anspruch 1, **dadurch gekennzeichnet, dass** der Spreizkörper (7) und/oder die Spreizhülse (8) eine reibungserhöhende Einrichtung (28) aufweist, die die Reibung zwischen dem Spreizkörper (7) und der Spreizhülse (8) erhöht, wenn die Spreizhülse (8) aufgespreizt ist.

6. Spreizanker nach Anspruch 5, **dadurch gekennzeichnet, dass** der Spreizkörper (7) eine Aufrauung und/oder einen Wulst als reibungserhöhendes Element aufweist, die/der so angeordnet sind, dass die Spreizhülse (8) an sie/ihn gelangt, wenn sie aufgespreizt ist.

7. Verfahren zum Verankern eines Spreizankers (1) in einem Loch (23) in einem Ankergrund (24), wobei der Spreizanker (1) einen Ankerschaft (2) mit einem hinteren Gewinde (3) mit einem Schraubelement (6), einen Spreizkörper (7), der mittels einer Schraubverbindung mit einem vorderen Gewinde (4) des Ankerschafts (2) verbunden ist, und eine Spreizhülse (8) aufweist, wobei durch Drehen des Ankerschafts (2) gegenüber dem Spreizkörper (7) der Spreizkörper (7) in Längsrichtung des Ankerschafts (2) bewegbar und in die Spreizhülse (8) einziehbar ist und die Spreizhülse (8) dadurch aufspreizt, wobei die Spreizhülse (8) nach außen stehende Krallen (14) mit Schneiden (15) aufweist, die beim Aufspreizen der Spreizhülse (8) in das Loch (23) in eine Lochwand (25) eingedrückt werden, wobei der Ankerschaft (2) ein Widerlager (10) für die Spreizhülse (8) aufweist, das die Spreizhülse (8) axial beim Einziehen des Spreizkörpers (7) abstützt, so dass die Spreizhülse (8) zu Beginn des Aufspreizens nicht axial bewegt, sondern ausschließlich aufgespreizt wird, und wobei das Schraubelement (6) drehmomentbehaftet mit dem hinteren Gewinde (3) des Ankerschafts (2) ist und ein größeres Drehmoment auf den Ankerschaft (2) als der Ankerschaft (2) auf den Spreizkörper (7) überträgt, **dadurch gekennzeichnet, dass** nach dem Überwinden des größeren Drehmoments des drehmomentbehafteten Schraubelements (6) eine axiale Zugkraft auf den Ankerschaft (2) ausgeübt wird, die den Spreizkörper (7) weiter in die Spreizhülse (8) einzieht und die Spreizhülse (8) stärker aufspreizt, und die Zugkaft die Abstützung der Spreizhülse (8) am Widerlager (10) entlastet, so dass sich die Spreizhülse (8) zusätzlich zu ihrer Aufspreizung axial im Loch (23) bewegt.

8. Verfahren nach Anspruch 7, **dadurch gekennzeichnet, dass** die nach dem anfänglichen ausschließlichen Aufspreizen folgende Axialbewegung der Spreizhülse (8) zusätzlich zu ihrer Aufspreizung eine Längsbewegung ihrer nach außen abstehenden Krallen (14) bewirkt, wodurch die Krallen (14) an der Lochwand (25) schaben.

9. Verfahren nach Anspruch 7 oder 8, **dadurch gekennzeichnet, dass** die Krallen (14) der Spreizhülse (8) durch die Bewegung der Spreizhülse (8) beim Aufspreizen in Längsrichtung eine Hinterschneidung (28) in der Lochwand (25) schaffen, die in axialer Richtung des Lochs (23) länger ist als die Krallen (14) dick sind.

## Claims

1. Expansible anchor (1) having an anchor shank (2) which has a rear thread (3) with a screw element (6), an expander body (7) which is connected by means of a screw connection to a front thread (4) of the anchor shank (2), and an expansion sleeve (8), wherein the expander body (7), by rotation of the anchor shank (2) relative to the expander body (7), is capable of being moved in the longitudinal direction of the anchor shank (2) and drawn into the expansion sleeve (8) and thereby expands the expansion sleeve (8), wherein the expansion sleeve (8) has outwardly projecting claws (14) with cutters (15) which are pressed into a hole wall (25) as the expansion sleeve (8) expands in a hole (23), wherein the anchor shank (2) has a counterbearing (10) for the expansion sleeve (8) which supports the expansion sleeve (8) axially as the expander body (7) is drawn in, and wherein the screw element (6) is under torque with the rear thread (3) of the anchor shank (2), so that, at least at the beginning of a rotational movement for expanding the expansion sleeve (8) of the expansible anchor (1), the anchor shank (2) co-rotates with the screw element (6) and the anchor shank (2) rotates relative to the expander body (7) at the beginning of the expansion of the expansion sleeve (8), **characterised in that** the cutters (15) are blunt and/or in that the cutters (15) have arcuate portions (18, 19) extending in the chord direction.

2. Expansible anchor according to claim 1, **characterised in that** the screw element (6) is arranged on the rear thread (3) in such a way that, after an initial expansion without movement of the expansion sleeve (8) in the longitudinal direction of the anchor shank (2), the screw element (6) rotates relative to the anchor shank (2) and the expansion sleeve (8) moves with the anchor shank (2).

3. Expansible anchor according to claim 1, **characterised in that** the expansion sleeve (8) is divided into expansion segments (12) by slots (11) extending in the longitudinal direction.

4. Expansible anchor according to claim 1, **characterised in that** the expansion sleeve (8) and/or the expander body (7) has at least one outwardly projecting anti-rotation element (22).

5. Expansible anchor according to claim 1, **characterised in that** the expander body (7) and/or the expansion sleeve (8) has a friction-increasing device (28) which increases the friction between the expander body (7) and the expansion sleeve (8) when the expansion sleeve (8) is expanded.

6. Expansible anchor according to claim 5, **characterised in that** the expander body (7) has as the friction-increasing element a roughened area and/or a bead which is/are so arranged that the expansion sleeve (8) reaches it/them when it is expanded.

7. Method of anchoring an expansible anchor (1) in a hole (23) in an anchoring substrate (24), wherein the expansible anchor (1) has an anchor shank (2) with a rear thread (3) with a screw element (6), an expander body (7) which is connected by means of a screw connection to a front thread (4) of the anchor shank (2), and an expansion sleeve (8), wherein the expander body (7), by rotation of the anchor shank (2) relative to the expander body (7), is capable of being moved in the longitudinal direction of the anchor shank (2) and drawn into the expansion sleeve (8) and thereby expands the expansion sleeve (8), wherein the expansion sleeve (8) has outwardly projecting claws (14) with cutters (15) which are pressed into a hole wall (25) as the expansion sleeve (8) expands in the hole (23), wherein the anchor shank (2) has a counterbearing (10) for the expansion sleeve (8) which supports the expansion sleeve (8) axially as the expander body (7) is drawn in, so that the expansion sleeve (8) does not move axially at the beginning of the expansion but is only expanded, and wherein the screw element (6) is under torque with the rear thread (3) of the anchor shank (2) and transmits a greater torque to the anchor shank (2) than the anchor shank (2) transmits to the expander body (7), **characterised in that**, once the greater torque of the under-torque screw element (6) has been overcome, an axial tensile force is exerted on the anchor shank (2) which draws the expander body (7) further into the expansion sleeve (8) and expands the expansion sleeve (8) further, and the tensile force releases the support of the expansion sleeve (8) against the counterbearing (10) so that the expansion sleeve (8), in addition to expanding, moves axially in the hole (23).

8. Method according to claim 7, **characterised in that** the axial movement of the expansion sleeve (8) after it has initially only expanded causes, in addition to its expansion, a longitudinal movement of its outwardly protruding claws (14), whereby the claws (14) scrape against the hole wall (25).

9. Method according to claim 7 or 8, **characterised in that** the claws (14) of the expansion sleeve (8), as a result of the movement of the expansion sleeve (8) during expansion in the longitudinal direction, produce an undercut (28) in the hole wall (25), the length of which undercut in the axial direction of the hole (23) is greater than the thickness of the claws (14).

## Revendications

1. Elément d'ancrage expansible (1) muni d'une tige d'ancrage (2) comprenant un filetage postérieur (3) associé à un élément vissable (6), un corps de déploiement (7) relié, au moyen d'une liaison par vissage, à un filetage antérieur (4) de ladite tige d'ancrage (2), et une douille expansible (8), sachant que, suite à une rotation imprimée à la tige d'ancrage (2) par rapport au corps de déploiement (7), ledit corps de déploiement (7) peut être mû dans la direction longitudinale de ladite tige d'ancrage (2) et peut être inséré dans la douille expansible (8), en déployant ainsi ladite douille expansible (8), laquelle douille expansible (8) est pourvue de griffes (14) dépassant vers l'extérieur et dotées de tranchants (15) qui, lors du déploiement de ladite douille expansible (8) dans un trou (23), sont enfoncés dans une paroi (25) dudit trou, ladite tige d'ancrage (2) comportant une contre-butée (10) dédiée à ladite douille expansible (8) et procurant un appui axial à ladite douille expansible (8) lors de l'insertion du corps de déploiement (7), sachant que l'élément vissable (6) est associé au filetage postérieur (3) de ladite tige d'ancrage (2) avec sollicitation par un couple de rotation, de telle sorte que la tige d'ancrage (2) tourne conjointement audit élément vissable (6), au moins au début d'un mouvement rotatoire visant à déployer la douille expansible (8) de l'élément d'ancrage expansible (1), et sachant que ladite tige d'ancrage (2) tourne vis-à-vis du corps de déploiement (7) au début du déploiement de ladite douille expansible (8), **caractérisé par le fait que** les tranchants (15) sont émoussés ; et/ou **par le fait que** lesdits tranchants (15) comportent des zones (18, 19) configurées en arc de cercle et s'étendant dans la direction de cordes.

2. Elément d'ancrage expansible selon la revendication 1, **caractérisé par le fait que** l'élément vissable (6) occupe, sur le filetage postérieur (3), une position telle qu'à l'issue d'un déploiement initial, sans mouvement de la douille expansible (8) dans la direction longitudinale de la tige d'ancrage (2), ledit élément vissable (6) tourne par rapport à ladite tige d'ancrage (2), et ladite douille expansible (8) se meut avec ladite tige d'ancrage (2).

3. Elément d'ancrage expansible selon la revendication 1, **caractérisé par le fait que** la douille expansible (8) est scindée en des segments expansibles (12), par l'intermédiaire de fentes (11) s'étendant dans la direction longitudinale.

4. Elément d'ancrage expansible selon la revendication 1, **caractérisé par le fait que** la douille expansible (8), et/ou le corps de déploiement (7), comporte(nt) au moins un élément (22) d'arrêt rotatif qui fait saillie vers l'extérieur.

5. Elément d'ancrage expansible selon la revendication 1, **caractérisé par le fait que** le corps de déploiement (7), et/ou la douille expansible (8), comporte(nt) un dispositif (28) amplificateur de frottement qui accroît le frottement, entre ledit corps de déploiement (7) et la douille expansible (8), lorsque ladite douille expansible (8) est à l'état déployé.

6. Elément d'ancrage expansible selon la revendication 5, **caractérisé par le fait que** le corps de déploiement (7) comporte, en tant qu'élément amplificateur de frottement, une zone de rugosité et/ou un bourrelet disposé(e) de façon telle que la douille expansible (8) vienne y prendre place à l'état déployé.

7. Procédé de blocage à demeure d'un élément d'ancrage expansible (1) dans un trou (23) pratiqué dans une base d'ancrage (24), ledit élément d'ancrage expansible (1) étant muni d'une tige d'ancrage (2) comprenant un filetage postérieur (3) associé à un élément vissable (6), un corps de déploiement (7) relié, au moyen d'une liaison par vissage, à un filetage antérieur (4) de ladite tige d'ancrage (2), et une douille expansible (8), sachant que, suite à une rotation imprimée à la tige d'ancrage (2) par rapport au corps de déploiement (7), ledit corps de déploiement (7) peut être mû dans la direction longitudinale de ladite tige d'ancrage (2) et peut être inséré dans la douille expansible (8), en déployant ainsi ladite douille expansible (8), laquelle douille expansible (8) est pourvue de griffes (14) dépassant vers l'extérieur et dotées de tranchants (15) qui, lors du déploiement de ladite douille expansible (8) dans le trou (23), sont enfoncés dans une paroi (25) dudit trou, ladite tige d'ancrage (2) comportant une contre-butée (10) dédiée à ladite douille expansible (8) et procurant un appui axial à ladite douille expansible (8) lors de l'insertion du corps de déploiement (7), de telle sorte que ladite douille expansible (8) ne soit pas mue axialement au début du déploiement, mais soit exclusivement déployée, et sachant que l'élément vissable (6) est associé au filetage postérieur (3) de la tige d'ancrage (2) avec sollicitation par un couple de rotation et transmet, à ladite tige d'ancrage (2), un couple de rotation plus élevé que celui transmis au corps de déploiement (7) par ladite tige d'ancrage (2), **caractérisé par le fait qu'**une force axiale de traction, appliquée à la tige d'ancrage (2) après qu'a été surmonté le couple de rotation plus élevé de l'élément vissable (6) à sollicitation par un couple de rotation, fait pénétrer le corps de déploiement (7) plus avant dans la douille expansible (8) et déploie plus intensément ladite douille expansible (8), et ladite force de traction déleste l'appui de ladite douille expansible (8) sur la contre-butée (10), de telle sorte que ladite douille expansible (8) se meuve axialement dans le trou (23), en plus de son déploiement.

8. Procédé selon la revendication 7, **caractérisé par le fait que** le mouvement axial de la douille expansible (8) en plus de son déploiement, succédant au déploiement initial exclusif, provoque un mouvement longitudinal de ses griffes (14) dépassant vers l'extérieur, de sorte que lesdites griffes (14) raclent la paroi (25) du trou.

9. Procédé selon la revendication 7 ou 8, **caractérisé par le fait que** les griffes (14) de la douille expansible (8) donnent naissance dans la paroi (25) du trou, suite au mouvement de ladite douille expansible (8) lors du déploiement dans la direction longitudinale, à une contre-dépouille (28) dont la longueur est supérieure à l'épaisseur desdites griffes (14) dans la direction axiale dudit trou (23).
